# EUROPEAN PATENT SPECIFICATION

(11) **EP 1 174 308 B1**
(45) Date of publication and mention of the grant of the patent: **20.04.2005**
(21) Application number: 01202688.6
(22) Date of filing: 13.07.2001
(51) Int. Cl.: B60Q 1/04

(54) **Headlamp for a bicycle or a moped**
Scheinwerfer für Fahrrad oder Moped
Phare pour bicyclette ou cyclomoteur

(30) Priority: 21.07.2000 NL 1015769
(43) Date of publication of application: 23.01.2002
(73) Proprietor: Spanninga Metaal B.V., 8501 MK Joure (NL)
(72) Inventor: Vellinga, Jacob, 8502 AL Joure (NL)
(74) Representative: Dohmen, Johannes Maria Gerardus

(56) References cited:
- EP-A- 1 004 473
- DE-A- 3 833 316
- FR-A- 1 017 328
- GB-A- 236 744
- GB-A- 879 149
- GB-A- 1 344 503
- US-A- 2 634 935

## Description

The invention relates to a headlamp for a bicycle or a moped, comprising a housing fitted with means for receiving a light source, a reflector which co-operates with said light source, and a support member supporting said housing, which functions to fix the headlamp to said bicycle or said moped, wherein said housing and said support member comprise parts supporting each other, which are adjustable with respect to each other for the purpose of adjusting the position of the housing relative to the support member, whilst a screw, whose head is disposed in the space of the headlamp that is defined by the housing and the reflector and which is passed through a plate disposed in the interior of the housing, which bridges an opening in the housing, is provided for fixing the housing in a desired position relative to the support member whereby the support member comprises a curved supporting surface at one end, against which a correspondingly shaped outer surface of the housing abuts, whilst the curved wall portion of the housing is provided with said opening in the form of a slotted hole for passing said fixing screw there through, and said support is provided with a hole for receiving the screw by means of which the housing is fixed to the support.

Such a headlamp for a freight car is known from DE-A-3833316.

In said known construction, the support member comprises a cup-shaped part, in which a correspondingly shaped dome-shaped part is disposed, which is connected to the housing. The housing and the support member can be fixed in a desired position by means of a screw extending through the nested cup-shaped and dome-shaped parts, which mates with a loose nut under the cup-shaped part of the support member, whereby said screw and nut are used also for mounting the headlamp on a bumper or the like.

GB-A-1344503 discloses a lamp for a motor vehicle with a housing having a rear wall constructed as a spherical cap. A base of said lamp has a face contacting on the rear wall of the housing and confirming to the shape of said wall. However, there are no means for prevention of the undesirable transversal movement of the housing on the support member foreseen in those prior art documents.

The invention is characterized in that said support member comprises two spaced-apart, projecting ribs formed on a wall portion at an end of an arm of the support member, whereby the free ends of said ribs form the supporting surface against which the correspondingly curved outer surface of the housing abuts and the end of said arm remote from said ribs comprises means for fixing said support member to a bicycle or a moped, that the threaded hole for said screw is formed in a further rib of said support member, which further rib projects at least partially into the slotted hole in the housing, and that the plate in the housing, through which said screw is passed, is confined between two ribs provided on the inner wall of the housing extending parallel to said slotted hole.

By using the construction according to the invention it becomes possible to obtain a headlamp of the above kind which is built up of a small number of parts and wherein the housing of the headlamp can be pivoted through a comparatively large angle relative to the support member and be fixed in any desired position with respect to said support member.

Thereby a stable support of the housing on the support member is obtained in that said support member comprises two spaced-apart, projecting ribs, whose free ends form the supporting surface against which the correspondingly curved outer surface of the housing abuts.

An adequate guidance of the housing with respect to the support member is furthermore achieved in that the hole for said screw is formed in a rib of said support, which rib projects at least partially into the slotted hole that is present in the housing.

The plate in the housing through which the screw is passed can be retained in a desired position in a simple manner in that said plate is confined between to ribs extending parallel to said slotted hole.

Undesirable movement in transverse direction of the housing with respect to the support member is thereby prevented in a simple manner in that the curved outer surface of the housing, which abuts against the supporting surface of the support member, is inwardly receded with respect to the other wall portions of the housing.

As the plate in the housing is retained in a fixed position, it is possible without any problem to provide the plate with a hole for passing electric wires there through, since there is no danger of the electric wires being damaged as a result of undesirable movements of the plate.

The invention will now be explained in more detail by means of a possible embodiment of a headlamp according to the invention, which is schematically shown in the accompanying figures.

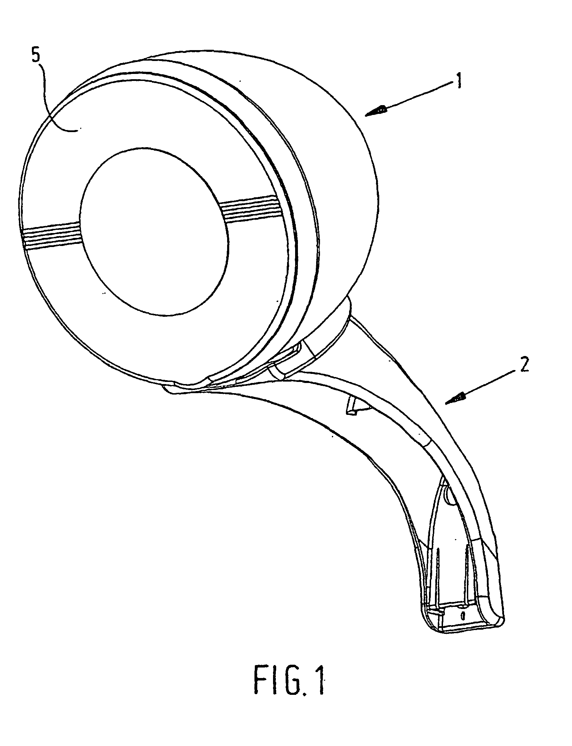

Figure 1 is a perspective view of a headlamp according to the invention.
Figure 2 is a perspective view of a headlamp according to the invention, wherein the various parts of the headlamp are spaced some distance apart.

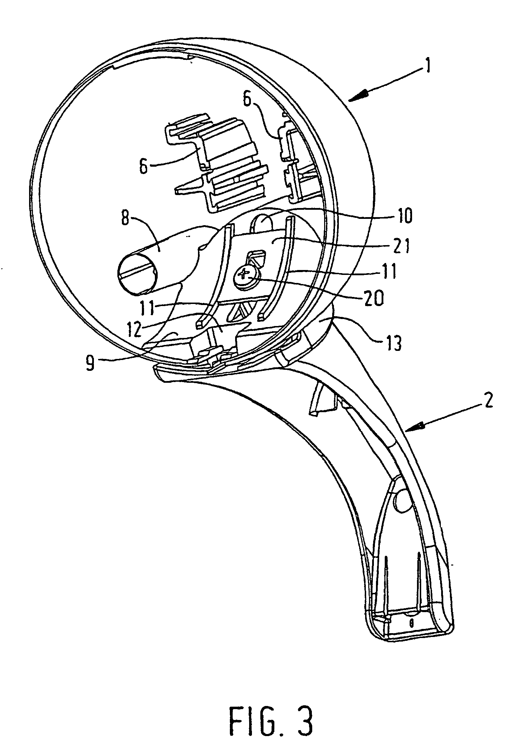

Figure 3 is a perspective view of the headlamp of Figure 1, from which the glass and the reflector, as well as the power-supplying parts have been removed.
Figure 4 is a sectional view of Figure 3.

As is shown in the figures, the headlamp comprises a housing 1 and a support 2.

A lens optic 3 comprising a reflector 4, which is known per se, as well as a glass 5 can be fitted in the open front side.

Disposed in the interior of housing 1 are spaced-apart supports 6, which are intended for fitting electrodes (not shown) and the like elements for supplying current to the light source, for example a lamp, which can be fitted in the socket 7 that joins housing 1.

A spare light source may be provided in a socket 8 that is present in the interior of housing 1.

The housing comprises a curved wall portion 9 near its bottom side, which wall portion is slightly inwardly receded relative to the wall portions of housing 1 that join said wall portion on either side thereof.

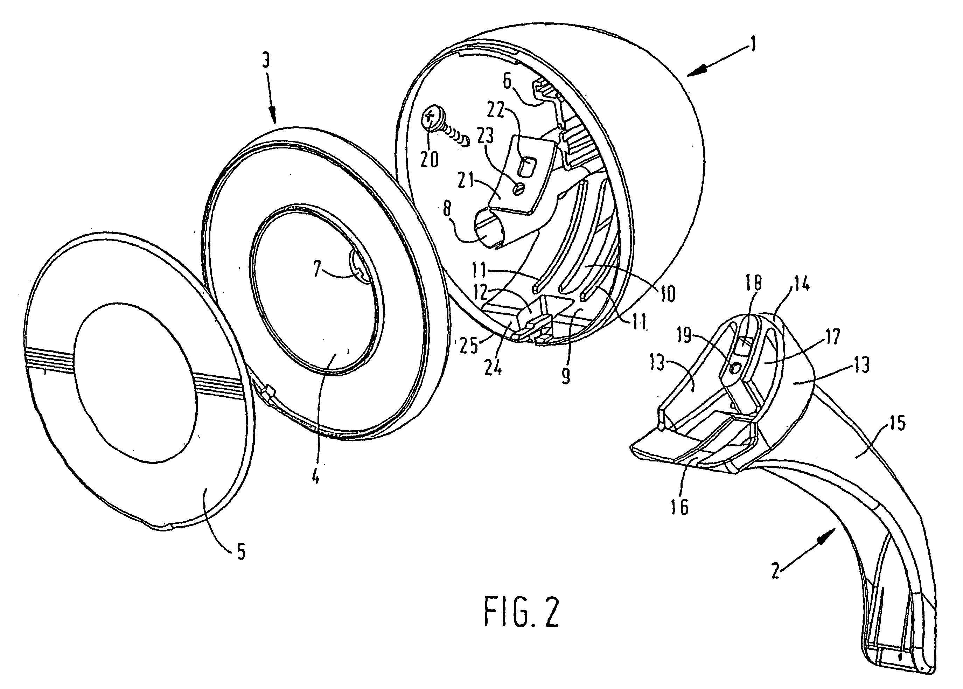

An elongated slotted hole 10 is formed in the centre of wall portion 9. Ribs 11 extending parallel to slotted hole 10 and into the interior of the housing are disposed on either side of slotted hole 10, spaced therefrom by some distance. As will be apparent in particular from Figure 2, the outer parts of curved wall portion 9 extend further in the direction of the open front side of housing 1 than the central part thereof, in which slotted hole 10 is present, so that an open space 12 is formed between the end of said central part of the curved wall portion and the open front side of the housing, which space functions to accommodate means connected to said lens optic 3 for securing said lens optic 3 to housing 1.

Disposed near one end of support member 2, near the sides thereof, are two spaced-apart ribs 13, which are interconnected by a curved connecting part 14. The connection between an arm 15 of U-shaped section of support member 2 and ribs 13 is made up of a wall portion 16 extending between the ends of the ribs 13 that face towards arm 15. Disposed between ribs 13 is a further rib 17, which likewise extends upwards from wall portion 16. A through hole 18 is formed in said rib 17 for passing electric wires there through, as well as a threaded bore 19.

The end of arm 15 remote from ribs 13 is suitably arranged, in a desired manner, for fixing the support member to a vehicle.

The upper edges of ribs 13 are designed to conform to the surface of curved wall portion 9 that faces away from the inner side of housing 1, in such a manner that in the mounted position of the headlamp the outer side of wall portion 9 will abut against the free edges of ribs 13 that form the supporting surfaces, so that wall portion 9 can be moved over the upper edges of ribs 13 whilst retaining the contact between the outer side of wall portion 9 and the free ends of ribs 13.

The housing can be clamped down in a desired position with respect to support member 2 by means of a clamping element, which comprises a screw 20 and a rectangular clamping plate 21 in the illustrated exemplary embodiment. Clamping plate 21 is provided with a hole 22 for passing electric wires there through and with a hole 23 for passing screw 20 there through.

Clamping plate 21 can be placed between ribs 11, whereby it is locked against rotation by said ribs. After the housing has been placed on ribs 13 with the outer side of wall portion 9, screw 20 can be passed through hole 23 in the clamping plate and through slotted hole 10 so as to be screwed into threaded hole 19. It will be apparent that housing 1 can be clamped down in a desired position relative to support member 2 thereby.

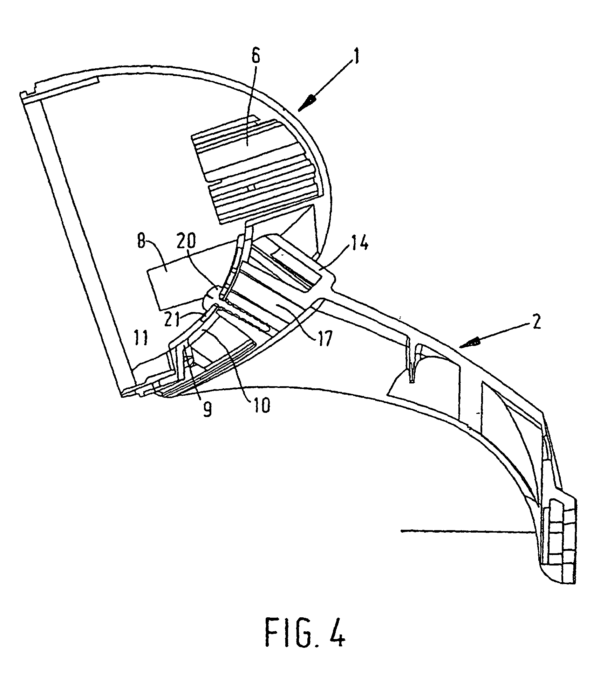

Movement of housing 1 relative to support member 2 is limited in one direction by the part 14 that interconnects ribs 13, which part can butt against the end of the recess in housing 1 that is formed by wall 1 portion 9, and in the other direction in that the free ends of the upright ribs 13 butt against the ribs 24, which extend between the ends of the wall portion 9 that face towards the open front side of the housing and the edge 25 of the housing that bounds the opening of the housing. As will be apparent from Figures 2 and 4, rib 17 includes a nose which projects into slotted hole 10, which nose functions to prevent housing 1 from rotating with respect to support member 2.

In the illustrated embodiment, wall portion 9 forms a surface which is curved in only one direction. It will be understood, however, that the outer surface of said wall portion 9 and the boundary surfaces of ribs 13 that mate therewith may also be designed to have other shapes, in such a manner that the mating parts of wall portion 9 and ribs 13 form part of a spherical or conical surface, for example.

## Claims

1. A headlamp for a bicycle or a moped, comprising a housing (1) fitted with means (7) for receiving a light source, a reflector (4) which co-operates with said light source, and a support member (2) supporting said housing (1), which functions to fix the headlamp to said bicycle or said moped, wherein said housing (1) and said support member (2) comprise parts (9, 13) supporting each other, which are adjustable with respect to each other for the purpose of adjusting the position of the housing (1) relative to the support member (2), whilst a screw (20), whose head is disposed in the space of the headlamp that is defined by the housing (1) and the reflector (4) and which is passed through a hole (23) in a plate (21) disposed in the interior of the housing (1), which plate (21) bridges an opening (10) in the housing (1), is provided for securing the housing (1) in a desired position relative to the support member (2), whereby the support member comprises a curved supporting surface at one end, against which a correspondingly shaped outer surface of the housing (1) abuts, whilst the curved wall portion (9) of the housing (1) is provided with said opening (10) in the form of a slotted hole for passing said fixing screw (20) there through, and said support member (2) is provided with a hole (19) for receiving the screw (20) by means of which the housing (1) is fixed to the support member (2), **characterized in that** said support member (2) comprises two spaced-apart, projecting ribs (13) formed on a wall portion (16) at an end of an arm (15) of the support member (2), whereby the free ends of said ribs (13) form the supporting surface against which the correspondingly curved outer surface of the housing (1) abuts and the end of said arm (15) remote from said ribs (13) comprises means for fixing said support member to a bicycle or a moped, that the threaded hole (19) for said screw is formed in a further rib (17) of said support member (2), which further rib (17) projects at least partially into the slotted hole (10) in the housing (1), and that the plate (21) in the housing (1), through which said screw (20) is passed, is confined between two ribs (11) provided on the inner wall of the housing (1), and extending parallel to said slotted hole (10).

2. A headlamp according to claim 1, **characterized in that** the curved outer surface (9) of the housing (1), which abuts against the supporting surface (13) of the support member (2), is inwardly receded with respect to the other wall portions of the housing (1).

3. A headlamp according to claim 1 or 2, **characterized in that** the plate (21) in the housing (1), through which said screw (20) is passed, is provided with a further hole (22) for passing electric wires extending through said support member (2).

## Patentansprüche

1. Scheinwerfer für ein Fahrrad oder Moped, umfassend ein mit Mitteln (7) zum Aufnehmen einer Lichtquelle, eines mit der Lichtquelle zusammenwirkenden Reflektors (4) und eines Halteteils (2), das das Gehäuse (1) hält und zum Befestigen des Scheinwerfers am Fahrrad oder Moped dient, versehenes Gehäuse (1), wobei das Gehäuse (1) und das Halteteil (2) sich gegenseitig haltende Teile (9, 13) umfassen, die zueinander einstellbar sind zum Zweck des Einstellens der Position des Gehäuses (1) relativ zum Halteteil (2), während eine Schraube (20), deren Kopf im durch das Gehäuse (1) und den Reflektor (4) ausgebildeten Raum des Scheinwerfers angeordnet ist und die durch ein Loch (23) in einer im Inneren des Gehäuses (1) angeordneten Platte (21), die eine Öffnung (10) im Gehäuse (1) überbrückt, hindurchtritt, zum Befestigen des Gehäuses (1) in einer gewünschten Position relativ zum Halteteil (2) vorgesehen ist, wobei das Halteteil eine gekrümmte Haltefläche an einem Ende umfasst, an die eine entsprechend geformte äußere Fläche des Gehäuses (1) anliegt, während der gekrümmte Wandteil (9) des Gehäuses (1) mit der Öffnung (10) in Form eines Langlochs versehen ist, so dass die Befestigungsschraube (20) hindurchtreten kann, und das Halteteil (2) mit einem Loch (19) zum Aufnehmen der Schraube (20) versehen ist, wodurch das Gehäuse (1) am Halteteil (2) befestigt ist, **dadurch gekennzeichnet, dass** das Halteteil (2) zwei an einem Wandteil (16) an einem Ende eines Arms (15) des Halteteils (2) ausgebildete beabstandete, überstehende Rippen (13) umfasst, wobei die freien Enden der Rippen (13) die Haltefläche ausbilden, an die die entsprechend gekrümmte äußere Fläche des Gehäuses (1) anliegt und das von den Rippen (13) entfernte Ende des Arms (15) Mittel zum Befestigen des Halteteils an einem Fahrrad oder Moped umfasst,
dass das Gewindeloch (19) für die Schraube in einer weiteren Rippe (17) des Halteteils (2) ausgebildet ist, wobei die weitere Rippe (17) mindestens teilweise in das Langloch (10) im Gehäuse (1) hineinragt,
und dass die Platte (21) im Gehäuse (1), durch die die Schraube (20) hindurchtritt, zwischen zwei an der inneren Wand des Gehäuses (1) vorgesehenen und sich parallel zum Langloch (10) erstreckenden Rippen (11) begrenzt ist.

2. Scheinwerfer nach Anspruch 1, **dadurch gekennzeichnet, dass** die gekrümmte äußere Fläche (9) des Gehäuses (1), die an der Haltefläche (13) des Halteteils (2) anliegt, relativ zu den anderen Wandteilen des Gehäuses (1) nach innen zurückversetzt ist.

3. Scheinwerfer nach Anspruch 1 oder 2, **dadurch gekennzeichnet, dass** die Platte (21) im Gehäuse (1), durch die die Schraube (20) hindurchtritt, mit einem weiteren Loch (22) zum Durchführen von sich durch das Halteteil (2) erstreckenden elektrischen Leitungen versehen ist.

## Revendications

1. Phare pour une bicyclette ou un cyclomoteur, comprenant un logement (1) auquel sont fixés des moyens (7) pour recevoir une source de lumière, un réflecteur (4) qui fonctionne conjointement avec ladite source de lumière et un élément de support (2) supportant ledit logement (1) conçu pour fixer le phare à ladite bicyclette ou audit cyclomoteur, dans lequel ledit logement (1) et ledit élément de support (2) comprennent des parties (9, 13) se supportant l'une l'autre, qui sont réglables l'une par rapport à l'autre dans le but de régler la position du logement (1) par rapport à l'élément de support (2), tandis qu'une vis (20), dont la tête est disposée dans l'espace du phare qui est défini par le logement (1) et le réflecteur (4) et qui est passée à travers un trou (23) dans une plaque (21) disposée à l'intérieur du logement (1), laquelle plaque (21) traversant une ouverture (10) dans le logement (1), est prévue pour fixer le logement (1) dans une position souhaitée par rapport à l'élément de support (2), moyennant quoi l'élément de support comprend une surface de support incurvée à une extrémité, contre laquelle une surface externe de forme correspondante du logement (1) vient en butée, tandis que la partie de paroi incurvée (9) du logement (1) est munie de ladite ouverture (10) sous la forme d'un trou en forme de fente pour faire passer ladite vis de fixation (20) à travers, et ledit élément de support (2) est muni d'un trou (19) pour recevoir la vis (20) au moyen de laquelle le logement (1) est fixé à l'élément de support (2), **caractérisé en ce que** ledit élément de support (2) comprend deux nervures espacées faisant saillies (13) formées sur une partie de paroi (16) au niveau d'une extrémité d'un bras (15) de l'élément de support (2), moyennant quoi les extrémités libres desdites nervures (13) forment la surface de support contre laquelle la surface externe de forme incurvée correspondante du logement (1) vient en butée et l'extrémité dudit bras (15) éloignée desdites nervures (13) comprenant des moyens pour fixer ledit élément de support à une bicyclette ou un cyclomoteur, **en ce que** le trou traité (19) pour ladite vis est formé dans une nervure supplémentaire (17) dudit élément de support (2), laquelle nervure supplémentaire (17) se projette au moins en partie dans le trou en forme de fente (10) dans le logement (1), et **en ce que** la plaque (21) dans le logement (1), à travers laquelle ladite vis (20) est passée, est retenue entre deux nervures (11) prévues sur la paroi interne du logement (1) et s'étendant parallèlement audit trou en forme de fente (10).

2. Phare selon la revendication 1, **caractérisé en ce que** la surface externe incurvée (9) du logement (1), qui vient en butée contre la surface de support (13) de l'élément de support (2), est abaissée vers l'intérieur par rapport aux autres parties de paroi du logement (1).

3. Phare selon la revendication 1 ou 2, **caractérisé en ce que** la plaque (21) dans le logement (1), à travers laquelle ladite vis (20) est passée, est munie d'un trou supplémentaire (22) pour faire passer des fils électriques s'étendant à travers ledit élément de support (2).
